# EUROPÄISCHE PATENTSCHRIFT

(11) **EP 0 882 633 B1**
(45) Veröffentlichungstag und Bekanntmachung des Hinweises auf die Patenterteilung: **08.06.2005**
(21) Anmeldenummer: 98109158.0
(22) Anmeldetag: 20.05.1998
(51) Int. Cl.: B60T 13/14

(54) **Bremsventil**
Brake valve
Soupape de freinage

(30) Priorität: 06.06.1997 DE 19723777
(43) Veröffentlichungstag der Anmeldung: 09.12.1998
(73) Patentinhaber: DEERE & COMPANY, Moline, Illinois 61265-8098 (US)
(72) Erfinder: Becker, Manfred, 67227 Frankenthal (DE); Gawlick, Dieter, 67063 Ludwigshafen (DE)
(74) Vertreter: Lau-Loskill, Philipp, Dipl.-Phys.

(56) Entgegenhaltungen:
- DE-A- 2 430 167
- DE-A- 3 542 418
- DE-A- 3 545 310
- DE-A- 3 837 650

## Beschreibung

Die Erfindung betrifft ein Bremsventil für Fahrzeugbremsen mit einem in einer stufenförmig ausgebildeten Zylinderbohrung eines Ventilgehäuses durch Einwirken einer Betätigungskraft gegen die Kraft einer Feder längsverschiebbaren Kolben, welcher Steuerkanten aufweist, die beim Verschieben des Kolbens aus seiner Ruhestellung Verbindungen zwischen einem dem Kolben stirnseitig vorgelagerten, mit den Fahrzeugbremsen verbindbaren Bremsdruckraum und einem Vorratsbehälter schließen sowie zwischen dem Bremsdruckraum und einer Druckquelle öffnen, so daß sich durch Unterstützung der Druckquelle in dem Bremsdruckraum ein Bremsdruck einstellt, der von der auf den Kolben wirkenden Betätigungskraft abhängt. Das Bremsventil enthält desweiteren einen Ringkolben, der gegenüber einem erweiterten Abschnitt der stufenförmigen Zylinderbohrung abgedichtet und nach Überwindung eines vorgebbaren Hubs des Kolbens durch diesen in der Zylinderbohrung verschiebbar ist.

Ein derartiges Bremsventil ist durch die US-A-3,163,007 bekannt geworden, welche ein in einer Verdrängerkammer dichtend verschiebbares Steuerelement enthält. Das Steuerelement schließt an seinem vorderen Ende in der Verdrängerkammer eine Druckkammer ein. Im hinteren Bereich ist durch eine im Steuerelement ausgebildete Ringnut ein Speicherdruckraum ausgebildet, der mit einer Druckquelle in Verbindung steht. Der Speicherdruckraum wird durch eine Steuerkante des Steuerelements begrenzt. Beim Verschieben des Steuerelements durch eine manuell betätigbare Steuerstange gegen die Kraft einer Feder öffnet die Steuerkante einen Durchgang zwischen dem Speicherdruckraum und einer Verbindungsleitung, die Verbindungen zu dem Druckraum und zu den Bremszylindern herstellt. Gleichzeitig wird über eine weitere Steuerkante eine Verbindung zwischen dem Druckraum und einem Vorratsbehälter geschlossen. Desweiteren enthält das Bremsventil einen in einem erweiterten Bereich der Druckkammer verschiebbaren Ringkolben, der dem Steuerelement mit einem Abstand vorgelagert und gegenüber der Verdrängerkammer abgedichtet ist. Wird durch Verschieben des Steuerelements der Abstand überwunden, so greift eine an der Stirnseite des Steuerelements befestigte Gummidichtung an dem Ringkolben an, so daß dieser an der weiteren Verschiebung des Steuerelements teilnimmt.

Es handelt sich bei dem bekannten Bremsventil um ein mengenunterstütztes Bremsventil, das bei Überschreiten eines vorgebbaren Steuerelementhubs einen Druckflüssigkeitsstrom von der Druckquelle zu den Bremszylindern freigibt und die Bremsen anlegt. Die Druckflüssigkeit liefert gleichzeitig eine auf das Steuerelement wirkende, dem Flüssigkeitsdruck proportionale Reaktionskraft, die der auf die Steuerstange ausgeübten Betätigungskraft entgegenwirkt und von dem auf das Bremspedal tretenden Fuß abgefangen werden muß. Dies ergibt ein sehr steifes Bremssystem. Die Steifheit hängt von der Fördergeschwindigkeit der Druckquelle, nicht aber von Leitungselastizitäten, Viskositätseinflüssen und dergleichen ab. Die Druckkammer dient zum einen als Reaktionskraftkammer, in der die Reaktionskraft aufgebaut wird. Fällt die Druckquelle aus und wird infolgedessen kein Reaktionsdruck in dem Druckraum aufgebaut, dient die Druckkammer zum anderen als Verdrängerkammer, die bei rein manuellem Verschieben des Steuerelements Druckflüssigkeit an die Bremszylinder liefert. Damit ist auch bei Druckausfall eine Notbremsung möglich.

Die Wirkungsweise des bekannten Bremsventils ist jedoch zumindest beim manuellen Bremsen (Notbetrieb bei Ausfall der Druckquelle) noch nicht voll befriedigend, da sowohl zum Füllen der Bremsen als auch zum Aufbau des eigentlichen Bremsdrucks der gleiche Querschnitt herangezogen wird. Es ist jedoch wünschenswert, daß beim Füllen ein größerer Querschnitt wirksam ist als beim Aufbau des Bremsdrucks, da beim Füllen eine vergleichsweise große Flüssigkeitsmenge mit geringem Druck und beim Bremsen eine geringe Flüssigkeitsmenge mit hohem Druck gefördert werden soll. Es ist daher wünschenswert, daß das Bremsventil für den Notbremsbetrieb zweistufig ausgebildet ist. Ein zweistufiges Bremsventil und die damit verbundene Wirkungsweise und dessen Vorteile wurden beispielsweise in der EP-A-0 368 120 beschrieben.

Die der Erfindung zugrunde liegende Aufgabe wird darin gesehen, ein gattungsgemäßes Bremsventil derart auszubilden, daß im Notbremsbetrieb ein zweistufiger Druckaufbau in den Bremsen möglich ist.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Das erfindungsgemäße Bremsventil ermöglicht bei uneingeschränkter Funktionsfähigkeit ein füllmengenunterstütztes Bremsen. Beim Betätigen eines auf den Kolben einwirkenden Bremshebels, beispielsweise eines Bremspedals, wird der Kolben verschoben und öffnet nach Überwindung eines Leerwegs die Steuerkante zur Druckquelle. Dabei bildet sich in dem Bremsdruckraum, der mit den Bremszylindern verbunden ist, ein Bremsdruck aus. Dieser Bremsdruck übt gleichzeitig auf den Kolben eine Gegenkraft zur Betätigungskraft aus. Bei Beibehaltung der Betätigungskraft bleibt der Kolben in schwimmender Stellung, bei der sich die Steuerkante im Grenzbereich zu ihrer Schließstellung befindet. Bei Erhöhung der Betätigungskraft wird die Steuerkante geöffnet und der Druck im Druckraum entsprechend der Betätigungskraft weiter erhöht. Bei diesem druckunter-stützten Bremsen bewegt sich der Kolben durch den in Ruhe bleibenden Ringkolben hindurch. Das Folgeventil bleibt geschlossen, da sich im Fülldruckraum kein, jedenfalls kein den Druck im Bremsdruckraum übersteigender Druck aufbaut.

Bei Ausfall der Druckquelle erfolgt ein manuelles Bremsen ohne Pumpenunterstützung. Das erfindungsgemäße Bremsventil ermöglicht bei diesem Betrieb einen zweistufigen Bremsvorgang, durch den sichergestellt wird, daß zum Füllen der Bremszylinder genügend Bremsflüssigkeit zur Verfügung steht und daß beim eigentlichen Bremsvorgang ein genügend hoher Flüssigkeitsdruck aufgebracht werden kann. Beim Betätigen des Bremspedals wird zunächst ein vorgebbarer Hub des Kolbens überwunden, ohne daß der Ringkolben von dem Kolben mitgenommen wird. Nach Überwindung dieses Hubs greift der Kolben an dem Ringkolben an, so daß dieser an der Kolbenverschiebung teilnimmt. Bei weiterer Verschiebung des Kolbens mit dem Ringkolben baut sich entsprechend den wirksamen Querschnitten zunächst im Fülldruckraum ein größerer Druck auf als im Bremsdruckraum, so daß sich das Folgeventil öffnet und die gesamte Querschnittsfläche aus Kolben und Ringkolben Bremsflüssigkeit zu den Bremszylindern fördert (Füllphase). Bei Überschreiten eines vorgebbaren Bremsdrucks, der dem Anlegen der Bremskolben der Radbremsen entspricht, wird der Fülldruckraum druckentlastet und das Folgeventil schließt. Die Druckentlastung kann vorzugsweise durch ein zwischen Fülldruckraum und Vorratsbehälter angeordnetes Druckventil erfolgen. Bei nun weiter steigender Betätigungskraft wird für den Druckaufbau im Bremsdruckraum nur noch der vergleichsweise kleine Querschnitt des Kolbens genutzt (Druckphase). Damit steigt bei einer Steigerung der Betätigungskraft während der Druckphase der Bremsdruck vergleichsweise stärker an als bei einer gleichen Steigerung der Betätigungskraft während der Füllphase. Ein zugehöriges Weg-Druck-Diagramm zeigt für die Druckphase einen steileren Verlauf als für die Füllphase.

Vorzugsweise ist der Querschnitt des zwischen Fülldruckraum und Vorratsbehälter angeordneten Druckventils durch eine Blendenanordnung begrenzt, so daß ein Flüssigkeitsabfluß aus dem Fülldruckraum gezielt einstellbar ist. Es ist desweiteren von Vorteil das Druckventil, gegebenenfalls gemeinsam mit einer Blendenanordnung, beispielsweise einer Lochblende, als vormontierbare, für sich funktionsfähige Baueinheit auszubilden, die sich gesondert herstellen, testen und auf einfache Weise in das Ventilgehäuse einsetzen, beispielsweise einschrauben, läßt.

Für ein gefühlvolles und dosiertes Bremsen wird durch eine bevorzugte Ausgestaltung der Erfindung vorgeschlagen, den Kolben wenigstens zweiteilig auszubilden. Er weist einen Betätigungs-kolben und einen Ventilschieber auf, die stirnseitig einander zugewandt sind und zwischen denen eine Modulationsfeder angeordnet ist. Die Modulationsfeder befindet sich somit innerhalb der Zylinderbohrung und ist geschützt untergebracht. Sie läuft komplett in der Bremsflüssigkeit, so daß beim Bremsen eine reibungsbedingte Hysterese vermieden werden kann.

Durch die Bemessung der wirksamen Querschnitte bzw. Durchmesser des Betätigungskolbens und des Ventilschiebers läßt sich die Bremscharakteristik beeinflussen. Vorzugsweise sind die wirksamen Querschnitte bzw. Durchmesser gleich. Der Ventilschieber ist zweckmäßigerweise als in die Zylinderbohrung eingeschliffener Kolben ausgebildet und enthält auf seinem Umfang mit dem Bremsdruckraum in Verbindung stehende Steuerkanten. Diese wirken mit in der Zylinderbohrung ausgebildeten Ringkanälen (Druckringkanal, Sumpfringkanal, Ausgleichsringkanal, Lastmelderingkanal) zusammen.

Der Kolben bzw. der Ventilschieber wird durch eine Feder gegen die Richtung der Betätigungskraft in seine Ruhestellung gedrängt. Für eine kompakte Bauweise ist es von Vorteil, daß der Kolben bzw. der Ventilschieber an seinem dem Bremsdruckraum zugewandten Ende eine Ausnehmung aufweist, die ein Ende einer schraubenförmigen Druckfeder aufnimmt, deren anderes Ende sich am Ventilgehäuse abstützt. Dies ermöglicht die Verwendung einer relativ langen Druckfeder mit einer günstigen Federcharakteristik.

Eine kompakte Bauweise ergibt sich in vorteilhafter Weise auch durch die Verwendung einer Modulationsfeder, die schraubenförmig ausgebildet ist und deren eines Ende von einer stirnseitig in den Betätigungkolben eingelassenen Ausnehmung und/oder deren anderes Ende von einer stirnseitig in den Ventilschieber eingelassenen Ausnehmung aufgenommen wird. Vorzugsweise ist der Hub des Betätigungskolbens, d. h. der Verschiebeweg zwischen seiner Ruhestellung und der Position, von der aus der Ringkolben mitgenommen wird, so bemessen, daß er gleich ist dem Leerweg der Steuerkante für den Druckanschluß, d. h. dem Abstand zwischen der Ruhestellung der Steuerkante und ihrer Position, in der eine Verbindung zwischen Druckquelle und Bremsdruckraum geöffnet wird, zuzüglich des stirnseitigen Abstands zwischen dem in Ruhestellung befindlichen Betätigungskolben und dem Ventilschieber und abzüglich eines toleranzbedingten Sicherheitsabstands. Damit wird sicher-gestellt, daß die Modulationsfeder bei normalen Bremsvorgängen stets wirksam ist. Nur bei plötzlich auftretenden heftigen Betätigungskräften können der Betätigungskolben und der Ventilschieber stirnseitig aneinander stoßen.

Der Ringkolben des erfindungsgemäßen Bremsventils erfüllt auf einfache Weise zwei Aufgaben. Zum einen ermöglicht er einen zweistufigen Druckaufbau für den Fall, daß der Bremsflüssigkeitssystemdruck ausfällt (manuelles Bremsen). Dann fehlt beim Bremsen die Gegenkraft im Bremsdruckraum, die durch den Druck der Druckquelle erzeugt wird. Der Kolben verschiebt sich über die Steuerkanten hinaus und nimmt nach Überwindung eines Hubs den Ringkolben mit. Dadurch wird beim manuellen Bremsen zunächst eine große Kolbenfläche, bestehend aus Betätigungskolbenfläche und Ringkolbenfläche, wirksam, um den Fülldruck im Fülldruckraum aufzubauen und Bremsflüssigkeit in die Bremszylinder zudrücken bis die Bremskolben der Fahrzeugbremsen anliegen. Bei weiterer Druckerhöhung wird, wie bereits erwähnt wurde, der vor dem Ringkolben liegende Fülldruckraum über ein Druckventil zum Vorratsbehälter entlastet und das Folgeventil geschlossen, so daß nur noch die kleinere Fläche des Ventilschiebers zum Druckaufbau genutzt wird.

Da, wie bereits im Zusammenhang mit der Würdigung des Standes der Technik erwähnt wurde, das erfindungsgemäße Bremsventil eine hohe Steifigkeit aufweist, ist es zweckmäßig, Vorsorge gegen eine Überbelastung des Bremssystems, insbesondere der Bremszylinder und Bremsleitungen, infolge hoher Betätigungskräfte zu treffen. Hierin liegt die zweite Aufgabe, die der Ringkolben erfüllt, indem er durch eine gezielte Druckbeaufschlagung den Bremsdruck beim druckunterstützten Bremsen auf einen bestimmten Wert begrenzt. Diese Funktion ist bei einer normalen pumpenunterstützten Bremsfunktion zusammen mit der Lenkbremse besonders wichtig.

Zur Optimierung dieser Funktion schlägt eine bevorzugte Ausgestaltung der Erfindung vor, zwischen dem Fülldruckraum und dem Bremsdruckraum ein Überdruckventil anzuordnen, das öffnet, wenn der Druck im Bremsdruckraum den Druck im Fülldruckraum um einen vorgebbaren Wert übersteigt. Das Überdruckventil kann beispielsweise auf eine Druckdifferenz von 80 bar eingestellt sein. Der Überdruck im Fülldruckraum kann sich über das erwähnte Druckventil in den Vorratsbehälter abbauen, wobei durch eine Blende im Druckventil die Abbaugeschwindigkeit einstellbar ist.

Eine einfach und kostengünstig herstellbare Bauform ergibt sich, wenn das Folgeventil und/oder das Überdruckventil gemäß einer bevorzugten Weiterbildung der Erfindung in den Kolben, insbesondere den Ventilschieber, integriert ist bzw. sind. Vorzugsweise sind beide Ventils gemäß den Merkmalen der Ansprüche 12 und 13 ineinander verschachtelt.

Bei einer Zweikreisbremse, wie sie beispielsweise bei Ackerschleppern üblich ist, sollen bei Straßenfahrt beide Kreise mit demselben Druck versorgt werden. Um einen Druckausgleich zu ermöglichen weist der Kolben, insbesondere der Ventilschieber, wenigstens eine Steuerkante auf, die beim Verschieben des Ventilschiebers aus seiner Ruhestellung eine Verbindung zwischen dem Bremsdruckraum und einem mit einem zweiten Bremsventil in Verbindung stehenden Ausgleichskanal öffnet. Wird als Druckquelle eine lastabhängig gesteuerte Hydraulikpumpe verwendet, so ist es desweiteren von Vorteil eine Steuerkante des Kolbens bzw. des Ventilschiebers vorzusehen, die beim Verschieben aus der Ruhestellung den Lastmeldeanschluß der Hydraulikpumpe mit dem Bremsdruckraum verbindet. Für den Druckausgleich und für die Lastmeldung kann dieselbe Steuerkante verwendet werden.

Es ist desweiteren vorteilhaft, als Druckquelle eine Hydraulikpumpe zu verwenden, die der Bereitstellung des Fahrzeugsystemdrucks dient und beispielsweise auch die hydraulische Servolenkung bedient. In diesem Fall braucht keine gesonderte Flüssigkeitsdruckquelle zur Versorgung des Bremsventils bereitgestellt zu werden, vielmehr kann beim pumpenunterstützten Bremsen der Fahrzeugsystemdruck zum Füllen der Bremsen herangezogen werden.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Schnittdarstellung durch ein erfindungsgemäßes Bremsventil in seiner Grundstellung,
- Fig. 2: einen vergrößerten Ausschnitt des in Fig. 1 dargestellten Bremsventils und
- Fig. 3 bis 5: das in Fig. 1 dargestellte Bremsventil in verschiedenen Bremsstellungen.

Das in den Figuren gezeigte Bremsventil enthält ein Ventilgehäuse 10 mit einer Zylinderbohrung 12, die in zwei Abschnitten 12a, 12b unterschiedlichen Durchmessers unterteilt ist und einen längsverschiebbaren Kolben aufnimmt. Der Kolben ist zweiteilig ausgebildet und besteht aus einem Betätigungskolben 14 und einem Ventilschieber 16, die über eine stirnseitig angreifende Modulationsfeder 18 miteinander in Verbindung stehen. Betätigungskolben 14 und Ventilschieber 16 haben in etwa gleiche Durchmesser und fluchten miteinander.

Der Betätigungskolben 14 ist in einem in den erweiterten Abschnitt 12b der Zylinderbohrung 12 eingeschraubten Einsatzteil 20 geführt und ragt mit seinem einen Ende aus dem Ventilgehäuse 10 heraus. Dichtringe 22, 24 zwischen Einsatzteil 20 und Ventilgehäuse 10 einerseits und zwischen Betätigungkolben 14 und Einsatzteil 20 andererseits schließen die Zylinderbohrung 12 hermetisch ab. Auf das aus dem Ventilgehäuse 10 herausragende Ende des Betätigungskolbens 14 kann mittels eines nicht dargetellten Bremspedals eine Betätigungs- oder Pedalkraft F ausgeübt werden, um den Betätigungskolben 14 in das Ventilgehäuse 10 hinein zu verschieben und das Bremsen des Fahrzeugs, vorzugsweise des Ackerschleppers, auszulösen.

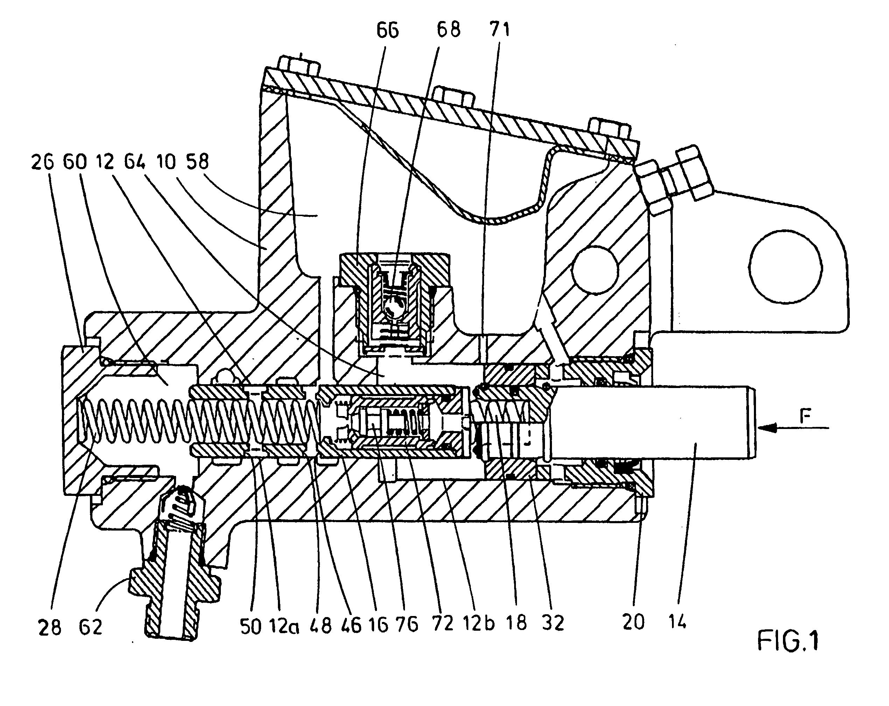

In das Ventilgehäuse 10 ist ein Einsatz 26 dichtend eingeschraubt, an dem sich eine Druckfeder 28 abstützt, die auf dem Ventilschieber 16 lastet und bestrebt ist, diesen mit der Modulationsfeder 18 und dem Betätigungskolben 14 in Richtung der in Fig. 1 dargestellten Grundstellung (hinsichtlich der Fig. 1 nach rechts) zu verschieben. Die Druckfeder 28 kann beispielsweise auf 100 N ausgelegt sein, was bei einem Kolbendurchmesser von 20 mm in etwa 3 bar entspricht. Ein wesentlicher Abschnitt der Druckfeder 28 wird von einer Längsausnehmung 30 des Ventilschiebers 16 aufgenommen und stützt sich in diesem an einem nach innen vorstehenden Ringbund 31 ab.

Im erweiterten Abschnitt 12b der Zylinderbohrung 12 ist ein Ringkolben 32 längsverschiebbar geführt, durch dessen Innenbohrung sich das in die Zylinderbohrung 12 ragende Ende des Betätigungskolbens 14 erstreckt. Der Ringkolben 32 ist gegenüber der Zylinderbohrung 12 und dem Betätigungskolben 14 durch je einen Dichtungsring 34, 36 abgedichtet. Der Ringkolben 32 läßt sich über einen begrenzten Hub H gegenüber dem Betätigungskolben 14 verschieben. Zur Hubbegrenzung trägt der Betätigungkolben 14 einen ersten Sprengring 38 und einen zweiten Sprengring 40. In der in Fig. 1 dargestellten Grundstellung liegt der Ringkolben 32 einerseits an dem ersten Sprengring 38 und andererseits an einer Stirnfläche des Einsatzteils 20 an und verhindert so, daß der Betätigungkolben 14 infolge der Kraft der Druckfeder 28 über die Grundstellung hinaus aus dem Ventilgehäuse 10 herausgedrückt wird.

In die Stirnseite des in die Zylinderbohrung 12 ragenden Endes des Betätigungskolbens 14 ist eine Sackbohrung 42 eingelassen, die die schraubenförmig ausgebildete Modulationsfeder 18 fast vollständig aufnimmt. Aus der Sackbohrung 42 ragt lediglich ein vergleichsweise kurzer Abschnitt der Modulationsfeder 18 heraus. Dieser greift an der ihm gegenüberliegenden Stirnseite des Ventilschiebers 16 an. Der Betätigungskolben 14 und der Ventilschieber 16 stehen sich in ihrer in Fig. 1 dargestellten Grundstellung mit einen stirnseitigen Abstand S gegenüber.

Der Ventilschieber 16 ist im wesentlichen hülsenförmig ausgebildet. Seine zylindrische Mantelfläche ist in den verjüngten Abschnitt 12a der Zylinderbohrung 12 eingeschliffen. In die Mantelfläche sind zwei Ringnuten eingelassen, die axial durch Steuerkanten 46, 48, 50 begrenzt sind und mit der konzentrischen Längsausnehmung 30 des Ventilkolbens 16 über mehrere auf dem Umfang verteilte Bohrungen verbunden sind. Der verjüngte Abschnitt 12a der Ventilbohrung 12 enthält drei nach innen offene Ringkanäle 52, 54, 56, die ebenfalls axial durch Steuerkanten begrenzt sind. Es handelt sich hierbei um einen Ausgleichs- und Lastmelderingkanal 52, einen Druckringkanal 54 und einen Entlastungsringkanal 56. Durch Verschieben des Ventilschiebers 16 aus seiner in Fig. 1 dargestellten Grundstellung verschließt die Steuerkante 46 nach Überwindung eines Leerwegs L eine Verbindung zwischen dem Entlastungsringkanal 56 und der Längsausnehmung 30 des Ventilschiebers 16. Dann öffnet die Steuerkante 50 eine Verbindung zwischen dem Ausgleichs- und Lastmelderingkanal 52 und der Längsausnehmung 30 und danach öffnet die Steuerkante 48 eine Verbindung zwischen dem Druckringkanal 54 und der Längsausnehmung 30.
Der Entlastungskanal 56 steht unmittelbar mit einem im Ventilgehäuse 10 ausgebildeten Vorratsbehälter 58 in Verbindung. Der Druckringkanal 54 ist mit einer nicht gezeigten Bremsflüssigkeitsdruckquelle, vorzugsweise einer Hydraulikpumpe, die der Bereitstellung des Fahrzeugsystemdrucks dient, verbunden. Zwischen der Hydraulikpumpe und dem Druckringkanal 54 kann eine nicht dargestellte den Flüssigkeitsstrom steuernde Ventilanordnung angeordnet sein, die insbesondere bei einem Absinken des durch die Hydraulikpumpe bereitgestellten Flüssigkeitsdrucks einen Flüssigkeitsabfluß aus der Zylinderbohrung 12 über den Druckringkanal 54 unterbindet. Der Ausgleichs- und Lastmelderingkanal 52 steht einerseits mit einem nicht gezeigten Lastmeldeanschluß einer Hydraulikpumpe und andererseits mit einem gleichartigen Ringkanal eines zweiten nicht gezeigten Bremsventils einer Zweikreisbremse in Verbindung. Auch in diesen Verbindungen können sich Steuerventile befinden, die hier jedoch nicht näher beschrieben wurden.

Die Zylinderbohrung 12 mündet im Bereich des dem Betätigungskolben 14 abgewandten Endes des Ventilschiebers 16 in einen Bremsdruckraum 60, in den sich die Längsausnehmung 30 des Ventilschiebers 16 öffnet. Der Bremsdruckraum 60 ist über einen Ventileinsatz 62 und nicht dargestellte Bremsleitungen mit den Bremszylindern der Fahrzeugbremse verbunden.

Dem Ringkolben 32 ist in axialer Richtung ein Fülldruckraum 64 vorgelagert, der über ein Druckventil 66 mit dem Vorratsbehälter 58 in Verbindung steht. Das Druckventil 66 besteht im wesentlichen aus einer Kugel 68, die durch die Kraft einer Feder 69 gegen einen Ventilsitz gedrückt wird und diesen verschließt, sofern der auf der Kugel 68 lastende Flüssigkeitsdruck die Federkraft nicht überwindet. Dem Druckventil 66 vorgelagert ist eine Blendenanordnung 70, die wenigstens eine den Flüssigkeitsdurchtritt bei offenem Druckventil 66 begrenzende Blende enthält. Das Druckventil 66 und die Blendenanordnung 70 sind als eine vormontierbare, in das Ventilgehäuse 10 einschraubbare Ventileinheit ausgebildet. Das Druckventil 66 öffnet den Fülldruckraum 64 zum Vorratsbehälter 58 bei einem Druck von beispielsweise 5 bar.

Der Fülldruckraum 64 steht desweiteren über einen Kanal 71 mit dem Vorratsbehälter 58 in Verbindung. Die in die Zylinderbohrung 12 mündende Kanalöffnung liegt nur wenig vor dem sich in seiner Grundstellung befindenden Ringkolben 32. Beim Verschieben des Ringkolbens 32 aus seiner Grundstellung wird der Kanal 71 verschlossen.

Der dem Betätigungskolben 14 zugewandte Abschnitt der Längsausnehmung 30 des Ventilschiebers 16 nimmt einen Ventileinsatz auf. Der Ventileinsatz enthält im wesentlichen ein Folgeventil mit einem hülsenförmigen Folgeventilkörper 72 und einer Folgeventilfeder 74, ein Überdruckventil mit einem Überdruckventilkörper 76 und einer Überdruckventilfeder 78 und ein Abschlußteil 80.

Das Abschlußteil 80 ist in das dem Betätigungskolben 14 zugewandte rohrförmige Ende des Ventilschiebers 16 eingesetzt und weist eine innenliegende Dichtfläche 82 auf. Das Abschlußteil 80 ist durch einen Dichtring 84 gegenüber dem Ventilschieber 16 abgedichtet. Eine besondere Befestigung des Abschlußteils 80 im Ventilschieber 16 ist nicht erforderlich. Das Abschlußteil 80 enthält eine axiale Bohrung 86 und weist auf seiner nach außen weisenden Stirnseite Radialschlitze 88 auf. Diese Radialschlitze 88 dienen der Erleichterung des Flüssigkeitsdurchtritts sofern die Modulationsfeder 18 zusammengedrückt ist und der stirnseitige Abstand zwischen Abschlußteil 80 und Betätigungkolben 14 klein ist.

Der Folgeventilkörper 72 ist hülsenförmig ausgebildet und weist an seinen Enden je einen äußeren Bund mit Längsdurchbrüchen auf. Um die Längsdurchbrüche zu bilden, können die Bünde in ihrem Querschnitt im wesentlichen quadratisch ausgebildet sein. Der Folgeventilkörper 72 stützt sich mittels seiner Bünde in der Längsausnehmung 30 ab und läßt sich zwischen dem nach innen vorspringenden Ringbund 31 des Ventilschiebers 16 und der Dichtfläche 82 des Abschlußteils 80 verschieben. Zwischen dem Folgeventilkörper 72 und dem Ringbund 31 ist eine schraubenförmige Folgeventilfeder 74 angeordnet, die den Folgeventilkörper 72 gegen die Dichtfläche 82 drängt, wo sich ein Ventilsitz ausbildet. Die Folgeventilfeder 74 ist so ausgelegt, daß sich das Folgeventil bei einer Druckdifferenz von beispielsweise 0,5 bar zwischen dem Fülldruckraum 64 und dem Bremsdruckraum 60 öffnet, indem sich der Folgeventilkörper 72 von der Dichtfläche 82 abhebt. Die Flüssigkeit kann nun durch den offenen Ventilsitz, die Längsdurchbrüche der Bünde und einen Ringraum zwischen der Längsausnehmung 30 und dem Folgeventilkörper 72 strömen.

Der axiale Durchtrittskanal des Folgeventilkörpers 72 ist durch ein Überdruckventil verschließbar, welches einen im Durchtrittskanal geführten, längsverschiebbaren Überdruckventil-körper 76 aufweist. Dieser ist auf seiner dem Bremsdruckraum 60 zugewandten Seite kegelförmig ausgebildet und bildet mit einer kegelförmigen Verengung des Durchtrittskanals einen Ventilsitz. Der Überdruckventilkörper 76 wird durch die Kraft einer schraubenförmigen Überdruckventilfeder 78 in Schließstellung des Ventilsitzes gedrängt. Die Überdruckventilfeder 78 stützt sich an einer Scheibe 90 ab, die mittels Sicherungsring 92 an dem Folgeventilkörper 72 befestigt ist. Die Überdruckventilfeder 78 ist so ausgelegt, daß sich das Überdruckventil bei einer Druckdifferenz von beispielsweise 80 bar zwischen dem Bremsdruckraum 60 und dem Fülldruckraum 64 öffnet, indem sich der Überdruckventilkörper 76 gegen die Kraft der Überdruckventilfeder 78 von dem Ventilsitz abhebt. Bei offenem Überdruckventil strömt die Flüssigkeit von dem Bremsdruckraum 60 durch die Längsausnehmung 30 in den Durchtrittskanal des Folgeventilkörpers 72, vorbei an dem Überdruckventilkörper 76, durch die Bohrung der Scheibe 88 und durch die axiale Bohrung sowie die Radialschlitze 88 des Abschlußteils 80 in den Fülldruckraum 64.

Die Funktionsweise des in den Figuren 1 bis 5 dargestellten Bremsventils ist folgende, wobei sich die Angaben "links" und "rechts" auf die Darstellungen in den Figuren richten:

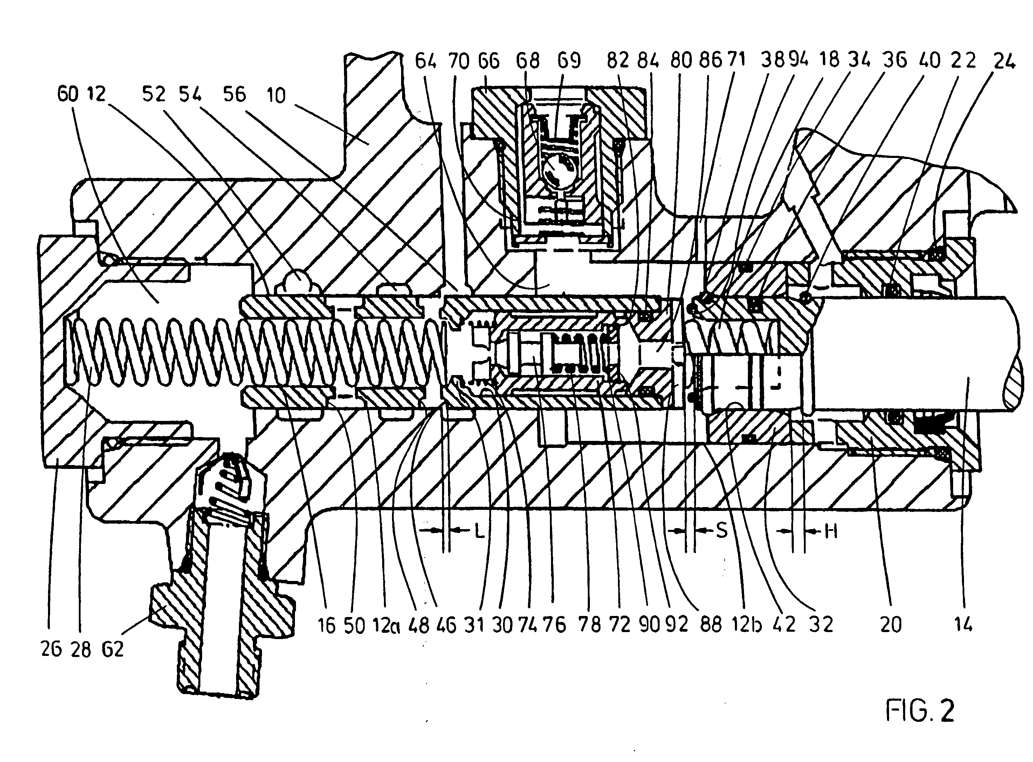

In der in Fig. 1 und 2 dargestellten Grundstellung des Bremsventils befindet sich der Betätigungskolben 14 in seiner rechten Endstellung, in der die Fahrzeugbremsen nicht betätigt werden. Hierbei drückt die Druckfeder 28 den Ventilschieber 16 zusammen mit der Modulationsfeder 18 und dem Betätigungskolben 14 nach links, so daß sich der Betätigungskolben 14 über den ersten Sprengring 38 und den Ringkolben 32 an der Stirnfläche des Einsatzteils 20 abstützt. Über den Kanal 71 ist ein Flüssigkeitsaustausch zwischen dem Fülldruckvolumen 64 und dem Vorratsbehälter 58 möglich. Dabei ist das Druckventil 66 geschlossen. Die Modulationsfeder 18 ist wesentlich steifer als die Druckfeder 28 und hält den Ventilschieber 16 zum Betätigungskolben 14 auf Distanz. Der stirnseitige Abstand in der Grundstellung ist mit S bezeichnet. Die Lage der Steuerkante 46 läßt einen Flüssigkeitsaustauch zwischen Bremsdruckraum 60 und Vorratsbehälter 58 zu. Die äußere Zylinderfläche des Ventilschiebers 16 verschließt den Druckringkanal 54 und den Ausgleichs- und Lastmelderingkanal 52, so daß kein Flüssigkeitsaustausch mit dem Bremsdruckraum 60 möglich ist. Im Fülldruckraum 64 und im Bremsdruckraum 60 herrscht der Druck des Ausgleichsbehälters 58. Daher sind das Folgeventil 72 und das Überdruckventil 76 geschlossen.

### Bremsen mit Druckquellenunterstützung:

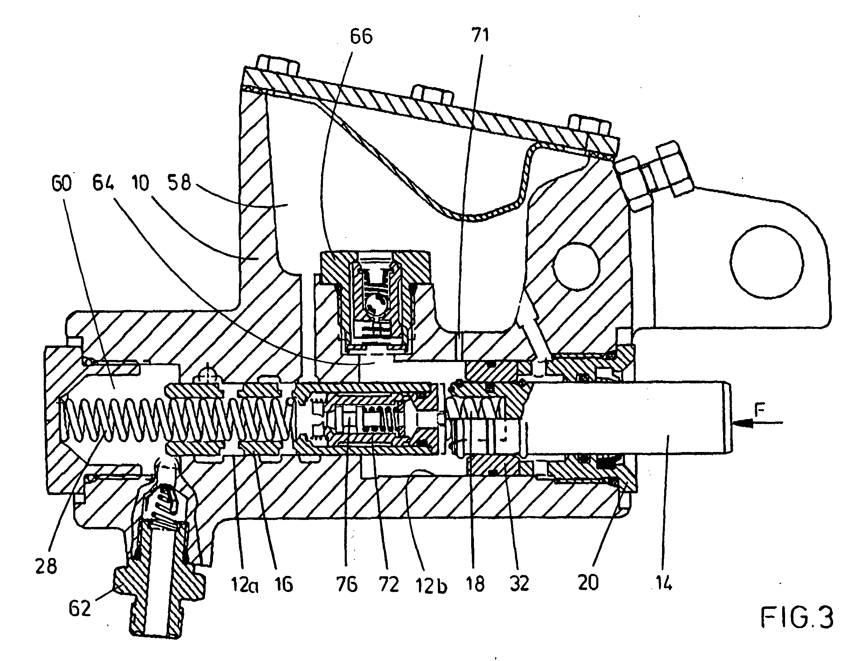

Durch Betätigung des Bremspedals wird eine Betätigungskraft F auf den Betätigungskolben 14 ausgeübt, die diesen gemeinsam mit dem Ventilschieber 16 gegen die Kraft der Druckfeder 28 nach links verschiebt, ohne das der Ringkolben 32 seine Lage verändert. Mit steigender Betätigungskraft F überwinden der Betätigungkolben 14 und der Ventilschieber 16 einen Leerweg L und die Steuerkante 46 verschließt den Durchgang zwischen Bremsdruckraum 60 und Vorratsbehälter 58. Desweiteren verbindet die Steuerkante 48 den Druckringkanal 54 mit dem Bremsdruckraum 60, wie es aus Fig. 3 hervorgeht. (Gleichzeitig oder etwas früher wird über die Steuerkante 50 eine Verbindung zwischen dem Ausgleichs- und Lastmelderingkanal 52 und dem Bremsdruckraum 60 hergestellt.) Damit gelangt unter Druck stehende Flüssigkeit der Druckquelle in den Bremsdruckraum 60 und belastet die linke Stirnseite des den Ventilschiebers 16 und drückt infolgedessen über die Modulationsfeder 18 auch den Betätigungskolben 14 gegen die Betätigungskraft F. Der Ventilschieber 16 wird zwischen der Druckkraft im Bremsdruckraum 60 und der Kraft der Druckfeder 28 einerseits und der Betätigungskraft F andererseits im Gleichgewicht gehalten. Dabei "schwimmt" er um eine Lage, in der die Verbindung vom Druckringkanal 54 zum Bremsdruckraum 60 zwischen offen und geschlossen gehalten wird (Schwimmstellung).

Mit steigender Betätigungskraft F steigt der Druck im Bremsdruckraum, der mit den Bremszylindern verbunden ist, an. Dabei behält der Ventilschieber 16 im wesentlichen seine Schwimmstellung bei, während sich der Betätungskolben 14 infolge der Kompression der Modulationsfeder 18 weiter nach links verschiebt. Der sich dabei einstellende Kompressionshub ist beispielsweise proportional zum Druck im Bremsdruckraum 60.

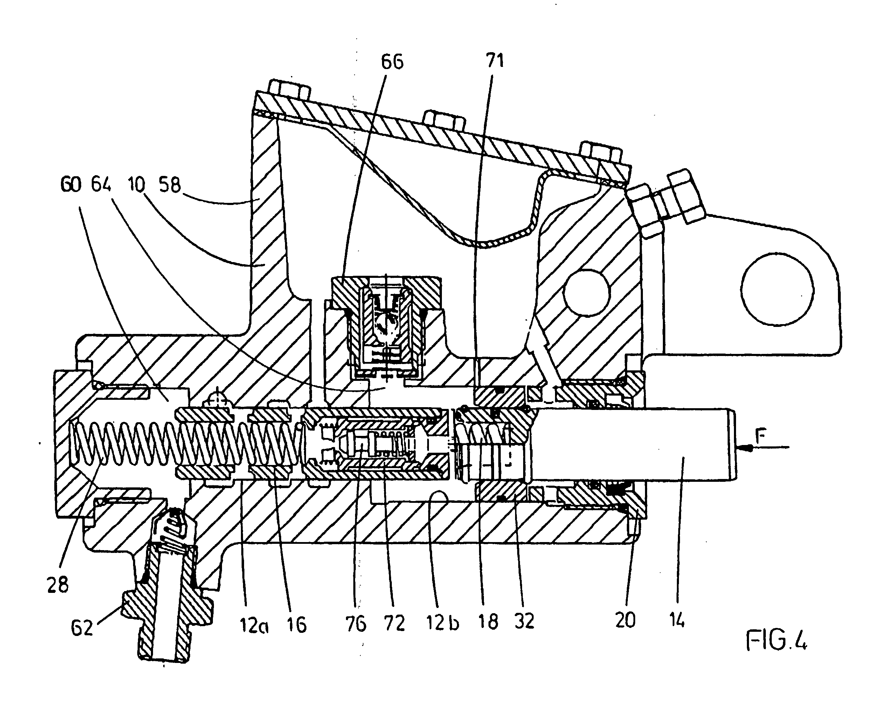

Wird der Betätigungskolben 14 so weit verschoben, daß die Summe aus Leerweg L und Kompressionshub einen Wert erreicht, der größer ist als der dem begrenzten Hub H des Ringkolbens 32 entsprechende Abstand zwischen Ringkolben 32 und zweitem Sprengring 40, so verschiebt sich der Ringkolben 32 gemeinsam mit dem Betätigungskolben 14 nach links. Dieser in Fig. 4 dargestellte Zustand wird beispielsweise bei einem Bremsdruck von 50 bar erreicht. Durch die Verschiebung des Ringkolbens 32 wird der Kanal 71 zwischen Fülldruckraum 64 und Vorratsbehälter 58 verschlossen, so daß sich ein Druck im Fülldruckraum 64 aufbaut, der bis zum Öffnungsdruck des Druckventils 66 ansteigt. Die erforderliche Betätigungskraft F zur Erhöhung des Bremsdrucks steigt mit Einsetzen der Verschiebung des Ringkolbens 32 steiler an, weil zusätzlich zu der auf dem Ventilschieber 16 lastenden Bremsdruckkraft eine Kraft aufgebracht werden muß, die dem auf dem Ringkolben 32 lastenden Öffnungsdruck des Druckventils 66 entspricht.

Mit Wirksamwerden des Ringkolbens 32 steigt die Kraft-Weg-Kennlinie der Betätigungskraft F steil an. Um einen scharfkantigen Knick in der Kennlinie, der durch die Bedienungsperson wahrnehmbar ist, zu glätten, ist stirnseitig am Betätigungskolben 14 in eine Ausnehmung ein O-Ring 94 eingelegt, der über die Stirnfläche des Betätigungskolbens 14 mit etwa 0,4 mm vorsteht. Kurz vor dem Wirksamwerden des Ringkolbens 32 greift der O-Ring 94 an der gegenüberliegenden Stirnseite des Ventilschiebers 16 an und wirkt als zusätzliche, zur Modulationsfeder 18 parallel geschaltete, dämpfende Feder.

Mit weiterer steigender Betätigungskraft F steigt auch der Bremsdruck weiter an und öffnet, bei beispielsweise 80 bar, das Überdruckventil 76. Die durch das Überdruckventil 76 in den Fülldruckraum 64 strömende Flüssigkeit kann nicht frei über das Druckventil 66 in den Vorratsbehälter abfließen, sondern wird durch die dem Druckventil 66 vorgelagerte Blendenanordnung 70 aufgestaut. Daher steigt der Druck im Fülldruckraum 64 an und belastet zusätzlich den Ringkolben 32. Der Bremsdruck läßt sich daher durch eine weitere Steigerung der Betätigungskraft F nicht, oder nicht nennenswert erhöhen, so daß eine Überlastung der Bremsleitungen und der Fahrzeugbremsen vermieden wird. Durch Abstimmung der Blendenanordnung kann der Druck im Fülldruckraum 64 und damit der Druckbegrenzungseffekt eingestellt werden.

Das erfindungsgemäße Bremsventil weist eine degressive Bremskennung auf. Zunächst baut beim Bremsen nur der relativ kleine Querschnitt des Ventilschiebers 16 den Bremsdruck auf. Wird der Betätigungskolben 14 durch steigende Betätigungskraft F und bei sich komprimierender Modulationsfeder 18 so weit verschoben, daß er den Ringkolben 32 mitnimmt, so ist eine zusätzliche Kraft aufzubringen, die dem Öffnungsdruck des Druckventils 66 und dem Ringkolbenquerschnitt entspricht. Mit Erreichen eines maximalen Bremsdrucks von beispielsweise 80 bar öffnet das Überdruckventil 76 und belastet den Ringkolben 32 und damit auch den Betätigungskolben 14 erheblich. Es ist dann kaum noch möglich, diese Belastung durch weitere Steigerung der Betätigungskraft F zu überwinden, um den Bremsdruck weiter zu steigern.

### Bremsen ohne Druckquellenunterstützung:

Fällt die Druckquelle aus, so wird der Bremsvorgang nicht füllmengenunterstützt. Wegen des fehlenden Drucks im Druckkanal 54 verharrt der Ventilschieber 16 nicht in einer Schwimmstellung sondern wird mit steigender Betätigungskraft F zusammen mit dem Betätigungskolben 14 über den Leerweg L hinaus nach links verschoben. Der Betätigungskolben 14 greift nach Überwindung des Hubs H über den zweiten Sprengring 40 an dem Ringkolben 32 an, so daß sich dieser mitbewegt und im Füllraum 64 einen Druck aufbaut, der den Druck im Bremsdruckraum 60 übersteigt und das Folgeventil 72 öffnet, so daß für das Füllen der Fahrzeugbremsen bis zur Anlage der Bremskolben die Summe der Querschnittsflächen des Ventilschiebers 16 und des Ringkolbens 32 genutzt werden und bei relativ kleinem Kolbenhub eine große Füllmenge gefördert wird.

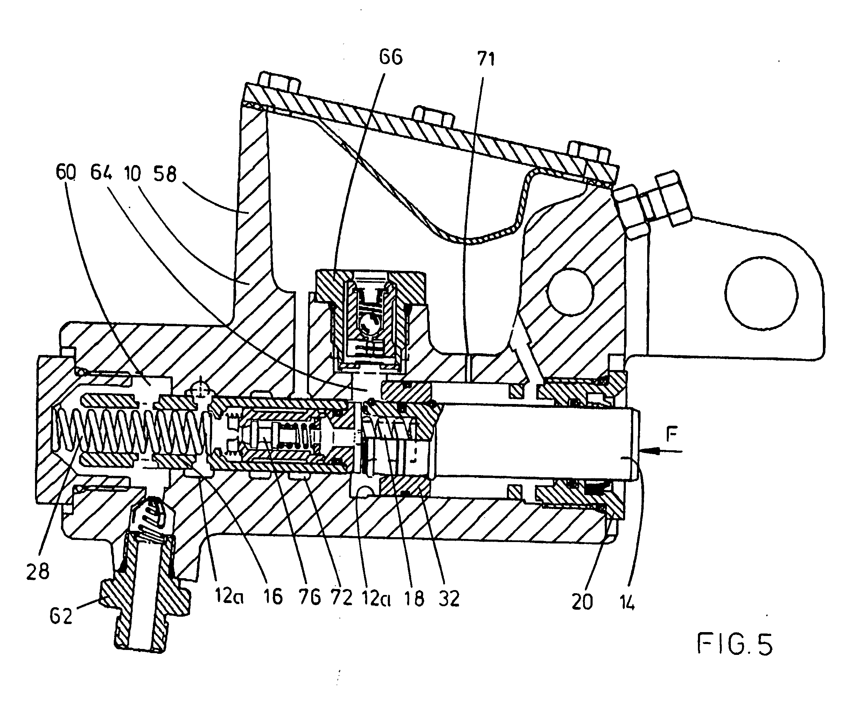

Mit Erreichen des Öffnungsdrucks des Druckventils 66 wird der Fülldruckraum 64 zum Vorratsbehälter 58 entlastet und der Druck steigt im Füllraum 64 nicht weiter an. Das Folgeventil 72 wird nun durch den weiter steigenden Druck im Bremsdruckraum 60 geschlossen, wie in Fig. 5 gezeigt. Für die Druckerhöhung im Bremsdruckraum 60 ist jetzt nur noch der Querschnitt des Ventilschiebers 16 verantwortlich, so daß durch eine Steigerung der Betätigungskraft F vergleichsweise große Drucksteigerungen im Bremsdruckraum hervorgerufen werden können.

Der im Zusammenhang mit dem Bremsen mit Druckquellenunterstützung beschriebene Druckbegrenzungseffekt und Schutz vor Überbelastung ist auch beim Bremsen ohne Druckquellenunterstützung gegeben, denn auch hier öffnet das Überdruckventil 76, wenn der Bremsdruck über beispielsweise 80 bar ansteigt.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Bremsventil für Fahrzeugbremsen mit einem in einer stufenförmig ausgebildeten Zylinderbohrung (12) eines Ventilgehäuses (10) durch Einwirken einer Betätigungskraft (F) gegen die Kraft einer Feder (28) längsverschiebbaren Kolben (14, 16), welcher Steuerkanten (46, 48) aufweist, die beim Verschieben des Kolbens (14, 16) aus seiner Ruhestellung Verbindungen zwischen einem dem Kolben (14, 16) stirnseitig vorgelagerten, mit den Fahrzeugbremsen verbindbaren Bremsdruckraum (60) und einem Vorratsbehälter (58) schließen sowie zwischen dem Bremsdruckraum (60) und einer Druckquelle öffnen, so daß sich durch Unterstützung der Druckquelle in dem Bremsdruckraum (60) ein Bremsdruck einstellt, der von der auf den Kolben (14, 16) wirkenden Betätigungskraft (F) abhängt, und mit einem Ringkolben (32), der gegenüber einem erweiterten Abschnitt (12b) der stufenförmigen Zylinderbohrung (12) abgedichtet und nach Überwindung eines vorgebbaren Hubs (H) des Kolbens (14, 16) durch diesen in der Zylinderbohrung (12) verschiebbar ist, **dadurch gekennzeichnet, daß** der Ringkolben (32) gegenüber dem Kolben (14, 16) über den gesamten Kolbenhub abgedichtet ist und mit diesem und dem erweiterten Abschnitt (12b) der Zylinderbohrung (12) einen vom Bremsdruckraum (60) räumlich getrennten Fülldruckraum (64) begrenzt, wobei der Fülldruckraum (64) und der Bremsdruckraum (60) über wenigstens ein sich zum Bremsdruckraum (60) hin öffnendes Folgeventil (72) miteinander in Verbindung stehen.

2. Bremsventil nach Anspruch 1, **dadurch gekennzeichnet, daß** der Fülldruckraum (64) über ein Druckventil (66) mit dem Vorratsbehälter (58) in Verbindung steht.

3. Bremsventil nach Anspruch 2, **dadurch gekennzeichnet, daß** der Durchtrittsquerschnitt des Druckventils (66) durch wenigstens eine Blendenanordnung (70) begrenzt ist.

4. Bremsventil nach Anspruch 2 oder 3, **dadurch gekennzeichnet, daß** das Druckventil (66) gegebenenfalls gemeinsam mit der Blendenanordnung (70) eine vormontierbare in das Ventilgehäuse (10) einsetzbare Ventileinheit bilden.

5. Bremsventil nach einem der Ansprüche 1 bis 4, **dadurch gekennzeichnet, daß** der Kolben einen Betätigungskolben (14) und einen Ventilschieber (16) aufweist, die stirnseitig einander zugewandt sind und zwischen denen eine Modulationsfeder (18) angeordnet ist.

6. Bremsventil nach Anspruch 5, **dadurch gekennzeichnet, daß** Betätigungskolben (14) und Ventilschieber (16) in etwa gleiche Querschnitte aufweisen.

7. Bremsventil nach einem der Ansprüche 1 bis 6, **dadurch gekennzeichnet, daß** der Kolben, insbesondere der Ventilschieber (16), an seinem dem Bremsdruckraum (60) zugewandten Ende eine Ausnehmung aufweist, die ein Ende einer schraubenförmigen Druckfeder (28) aufnimmt, deren anderes Ende sich am Ventilgehäuse (10) abstützt.

8. Bremsventil nach einem der Ansprüche 5 bis 7, **dadurch gekennzeichnet, daß** die Modulationsfeder (18) eine schraubenförmige Druckfeder ist, deren eines Ende von einer stirnseitig in den Betätigungskolben (14) eingelassenen Ausnehmung (42) und/oder deren anderes Ende von einer stirnseitig in den Ventilschieber (16) eingelassenen Ausnehmung aufgenommen wird.

9. Bremsventil nach einem der Ansprüche 5 bis 8, **dadurch gekennzeichnet, daß** der Hub (H) des Betätigungskolbens (14), zwischen seiner Ruhestellung und der Mitnahme des Ringkolbens (32) gleich ist dem Leerweg (L) der Drucksteuerkante (46, 48) des Ventilschiebers (16) zuzüglich des stirnseitigen Abstands (S) zwischen dem Betätigungskolben (14) und dem Ventilschieber (16) und abzüglich eines toleranzbedingten Sicherheitsabstands.

10. Bremsventil nach einem der Ansprüche 5 bis 9, **dadurch gekennzeichnet, daß** in der Stirnseite des Betätigungkolbens (14), die dem Ventilschieber (16) zugewandt ist, oder in der Stirnseite des Ventilschiebers, die dem Betätigungskolben (14) zugewandt ist, eine Eindrehung vorgesehen ist, die einen O-Rings (94) derart aufnimmt, daß der O-Ring (94) teilweise, insbesondere 0,2 bis 0,7 mm, über die Stirnseite vorsteht.

11. Bremsventil nach einem der Ansprüche 1 bis 10, **dadurch gekennzeichnet, daß** zwischen dem Fülldruckraum (64) und dem Bremsdruckraum (60) ein Überdruckventil (76) angeordnet ist, welches bei einer vorgebbaren Druckdifferenz zwischen Bremsdruckraum (60) und Fülldruckraum (64) zum Füll-druckraum (64) öffnet.

12. Bremsventil nach einem der Ansprüche 1 bis 11, **dadurch gekennzeichnet, daß** das Folgeventil (72) und/oder das Überdruckventil (76) in den Kolben, insbesondere den Ventilschieber (16), integriert ist.

13. Bremsventil nach Anspruch 12, **dadurch gekennzeichnet, daß** der Kolben, insbesondere der Ventilschieber (16), eine konzentrische Längsausnehmung (30) aufweist, die auf der dem Bremsdruckraum (60) abgewandten Seite in eine sich im Querschnitt verjüngende Dichtfläche (82) übergeht, daß in der Längsausnehmung (30) ein Folgeventilkörper (72) verschiebbar angeordnet ist, der mit einer Stirnseite einen mit der Dichtfläche (82) zusammenwirkenden Ventilsitz bildet und durch die Kraft einer sich an dem Kolben bzw. dem Ventilschieber (16) abstützenden Folgeventilfeder (74) gegen die Dichtfläche (82) gedrückt wird, derart, daß bei einem Druck im Fülldruckraum (64), der den Druck im Bremsdruckraum (60) zuzüglich der Wirkung der Folgeventilfeder (74) übersteigt, der Ventilsitz des Folgeventilkörpers (72) von der Dichtfläche (82) abgehoben und ein Durchtrittskanal zwischen Fülldruckraum (64) und Bremsdruckraum (60) geöffnet wird.

14. Bremsventil nach Anspruch 13, **dadurch gekennzeichnet, daß** der Folgeventilkörper (72) hülsenförmig ausgebildet und auf seiner dem Bremsdruckraum (60) zugewandten Seite eine innenliegende, konzentrische Dichtfläche aufweist, daß in dem Folgeventilkörper (72) ein Überdruckventilkörper (76) verschiebbar angeordnet ist, der mit einer Stirnseite einen mit der Dichtfläche zusammenwirkenden Ventilsitz bildet und durch die Kraft einer sich an dem Folgeventilkörper (72) abstützenden Überdruckventilfeder (78) gegen die Dichtfläche gedrückt wird, derart, daß bei einem Druck im Bremsdruckraum (60), der den Druck im Fülldruckraum (64) zuzüglich der Wirkung der Überdruckventilfeder (78) übersteigt, der Ventilsitz des Überdruckventilkörpers (76) von der Dichtfläche abgehoben und ein Durchtrittskanal zwischen Bremsdruckraum (60) und Fülldruckraum (64) geöffnet wird.

15. Bremsventil nach einem der Ansprüche 1 bis 14, **dadurch gekennzeichnet, daß** der Kolben, insbesondere der Ventilschieber (16), wenigstens eine Steuerkante (50) aufweist, die beim Verschieben des Kolbens, insbesondere des Ventilschiebers (16), aus seiner Ruhestellung eine Verbindung zwischen dem Bremsdruckraum (60) und einem mit einem zweiten Bremsventil in Verbindung stehenden Ausgleichskanal und/oder einem Lastmeldeanschluß einer als Druckquelle dienenden Hydraulikdruckpumpe öffnet.

16. Bremsventil nach einem der Ansprüche 1 bis 15, **dadurch gekennzeichnet, daß** die Druckquelle eine Hydraulikpumpe zur Bereitstellung des Fahrzeugsystemdrucks ist.

## Claims

1. A brake valve for vehicle brakes, with a piston (14, 16), which can be shifted longitudinally against the force of a spring (28) by the application of an actuating force (F), within a cylinder bore (12) of stepped form in a valve housing (10), and which has control edges (46, 48) which, on shifting the piston (14, 16) out of its rest position, close a connection between a brake pressure chamber (60), which can be connected to the vehicle brakes, located at the front end of the piston (14, 16) and a reservoir (58) and open a connection between the brake pressure chamber (60) and a pressure source, so that a brake pressure assisted by the pressure source is established in the brake pressure chamber (60), depending on the actuating force (F) acting on the piston (14, 16), and with an annular piston (32) which is sealed relative to a widened section (12b) of the cylinder bore (12) of stepped form and which can be shifted in the cylinder bore (12) by the piston (14, 16) after exceeding a predetermined stroke (H) of the latter, **characterized in that** the annular piston (32) is sealed relative to the piston (14, 16) over the whole piston stroke and bounds with the latter and the widened section (12b) of the cylinder bore (12) a fill pressure chamber (64) spatially separate from the brake pressure chamber (60), wherein the fill pressure chamber (64) and the brake pressure chamber (60) are in communication through at least one sequence valve (72) opening into the brake pressure chamber (60).

2. A brake valve according to claim 1, **characterized in that** the fill pressure chamber (64) is in communication with the reservoir (58) through a pressure valve (66).

3. A brake valve according to claim 2, **characterized in that** the passage cross-section of the pressure valve (66) is limited by at least one orifice arrangement (70).

4. A brake valve according to claim 2 or 3, **characterized in that** the pressure valve (66) forms, optionally in common with the orifice arrangement (70), a valve unit which can be fitted pre-assembled in the valve housing (10).

5. A brake valve according to any of claims 1 to 4, **characterized in that** the piston comprises and actuating piston (14) and a valve slide (16) which face one another and between which a modulation spring (18) is arranged.

6. A brake valve according to claim 5, **characterized in that** the actuating piston (14) and the valve slide (16) have approximately equal cross-sections.

7. A brake valve according to any of claims 1 to 6, **characterized in that** the piston, the valve slide (16) in particular, has a recess at its end facing the brake pressure chamber (60), the recess receiving one end of a helical compression spring (28), whose other end is supported on the valve housing (10).

8. A brake valve according to any of claims 5 to 7, **characterized in that** the modulation spring (18) is a helical compression spring whose one end is received by a recess (42) formed in the face of the actuating piston (14) and/or whose other end is received by a recess formed in the face of the valve slide (16).

9. A brake valve according to any of claims 5 to 8, **characterized in that** stroke (H) of the actuating piston (14) between its rest position and the entrainment of the annular piston (32) is the same as the idle path (L) of the pressure control edge (44, 48) of the valve slide (16) plus the face distance (S) between the actuating piston (14) and the valve slide (16) and less a safety distance imposed by tolerances.

10. A brake valve according to any of claims 5 to 9, **characterized in that** a groove is provided in the face of the actuating piston (14) which faces the valve slide (16) or in the face of the valve slide which faces the actuating piston (14) and receives an O-ring (94) in such a way that the O-ring (94) projects partially, in particular 0.2 to 0.7 mm beyond the face.

11. A brake valve according to any of claims 1 to 10, **characterized in that** an excess pressure valve (76) is disposed between the fill pressure chamber (64) and the brake pressure chamber (60) and opens to the fill pressure chamber (64) with a predetermined pressure difference between the brake pressure chamber (60) and the fill pressure chamber (64).

12. A brake valve according to any of claims 1 to 11, **characterized in that** the sequence valve (72) and/or the excess pressure valve (76) is integrated in the piston, in particular in the valve slide (16).

13. A brake valve according to claim 12, **characterized in that** the piston, in particular the valve slide (16) has a concentric elongated recess (30) which passes over on the side facing away from the brake pressure chamber (60) into a sealing face (82) tapering in cross-section, **in that** a sequence valve body (72) is slidably arranged in the elongated recess (30) and forms a valve seat by its end, cooperating with the sealing face (82) and is biased by the force of a sequence valve spring (74) supported on the piston or the valve slide (16) against the sealing face (82), in such a manner that the valve seat of the sequence valve body (72) is lifted from the sealing face (82) with a pressure in the fill pressure chamber (64) which exceeds the pressure in the brake pressure chamber (60) plus the action of the sequence valve spring (74), and a through channel between the fill pressure chamber (64) and the brake pressure chamber (60) is opened.

14. A brake valve according to claim 13, **characterized in that** the sequence valve body (72) is of sleeve form and has an internal, concentric sealing surface at its end facing the brake pressure chamber (60), **in that** an excess pressure valve body (76) is arranged slidably in the sequence valve body (72) and has a valve seat at its end cooperating with the sealing surface and is biased against the sealing surface by the force of an excess pressure valve spring (78) supported on the sequence valve body (72), such that the valve seat of the excess pressure valve body (76) is lifted from the sealing surface at a pressure in the brake pressure chamber (60) which exceeds the pressure in the fill pressure chamber (64) plus the action of the excess pressure valve spring (78) and a through channel between the brake pressure chamber (60) and the fill pressure chamber (64) is opened.

15. A brake valve according to any of claims 1 to 14, **characterized in that** the piston, in particular the valve slide (16), has at least one control edge (50) which, on shifting of the piston, in particular of the valve slide (16), out of its rest position, opens a connection between the brake pressure chamber (60) and an equalising channel communicating with a second brake valve and/or a load signalling port of a hydraulic pressure pump serving as a pressure source.

16. A brake valve according to any of claims 1 to 15, **characterized in that** the pressure source is a hydraulic pump for providing the vehicle system pressure.

## Revendications

1. Soupape de freinage pour freins de véhicule comportant un piston (14, 16) déplaçable dans le sens longitudinal contre la force d'un ressort (28), sous l'influence d'une force d'actionnement (F), dans un alésage cylindrique (12) configuré en étages d'un carter de soupape (10), lequel piston comprend des arêtes de commande (46, 48) qui, lors du déplacement du piston (14, 16) à partir de sa position de repos, ferment des connexions entre une chambre de pression de freinage (60), raccordable aux freins de véhicule, placée en amont du piston (14, 16) côté frontal et un réservoir de stockage (58) et ouvre des connexions entre la chambre de pression de freinage (60) et une source de pression de telle sorte qu'une pression de freinage se forme dans la chambre de pression de freinage (60) avec l'aide de la source de pression, pression de freinage qui dépend de la force d'actionnement (F) agissant sur le piston (14, 16), et comportant un piston annulaire (32) qui est étanchéifié par rapport à une section étendue (12b) de l'alésage cylindrique à étages (12) et déplaçable grâce au piston (14, 16) dans l'alésage cylindrique à étages (12), au-delà d'une course prédéfinissable (H) dudit piston (14, 16), **caractérisée en ce que** le piston annulaire (32) est étanchéifié par rapport au piston (14, 16) sur l'ensemble de la course de piston et délimite, avec celui-ci et avec la section étendue (12b) de l'alésage cylindrique à étages (12), une chambre de pression de remplissage (64) séparée dans l'espace de la chambre de pression de freinage (60), la chambre de pression de remplissage (64) et la chambre de pression de freinage (60) étant reliées l'une avec l'autre par le biais d'au moins une soupape de séquence (72) s'ouvrant sur la chambre de pression de freinage (60).

2. Soupape de freinage selon la revendication 1, **caractérisée en ce que** la chambre de pression de remplissage (64) est reliée au réservoir de stockage (58) par le biais d'une soupape de refoulement (66).

3. Soupape de freinage selon la revendication 2, **caractérisée en ce que** la section du passage de la soupape de refoulement (66) est délimitée par au moins un obturateur (70).

4. Soupape de freinage selon la revendication 2 ou 3, **caractérisée en ce que** la soupape de refoulement (66) forme, le cas échéant, conjointement à l'obturateur (70) un bloc de soupape, pouvant être prémonté, insérable dans le carter de soupape (10).

5. Soupape de freinage selon l'une quelconque des revendications 1 à 4, **caractérisée en ce que** le piston comprend un piston d'actionnement (14) et un tiroir de soupape (16) qui sont tournés l'un vers l'autre côté frontal et entre lesquels un ressort de modulation (18) est disposé.

6. Soupape de freinage selon la revendication 5, **caractérisée en ce que** le piston d'actionnement (14) et le tiroir de soupape (16) présentent des sections à peu près identiques.

7. Soupape de freinage selon l'une quelconque des revendications 1 à 6, **caractérisée en ce que** le piston, en particulier le tiroir de soupape (16), présente, sur son extrémité tournée vers la chambre de pression de freinage (60), un creux qui loge une extrémité d'un ressort à pression hélicoïdal (28) dont l'autre extrémité s'appuie sur le carter de soupape (10).

8. Soupape de freinage selon l'une quelconque des revendications 5 à 7, **caractérisée en ce que** le ressort de modulation (18) est un ressort de pression hélicoïdal dont une extrémité est logée dans un creux (42) réalisé côté frontal dans le piston d'actionnement (14) et/ou dont l'autre extrémité est logée dans un creux réalisé côté frontal dans le tiroir de soupape (16).

9. Soupape de freinage selon l'une quelconque des revendications 5 à 8, **caractérisée en ce que** la course (H) du piston d'actionnement (14) est, entre sa position de repos et l'entraînement du piston annulaire (32), identique au passage à vide (L) de l'arête de commande de la pression (46, 48) du tiroir de soupape (16) plus l'écart côté frontal (S) entre le piston d'actionnement (14) et le tiroir de soupape (16) et moins un écart de sécurité qui est fonction de la tolérance.

10. Soupape de freinage selon l'une quelconque des revendications 5 à 9, **caractérisée en ce que**, dans la face frontale du piston d'actionnement (14) qui est tournée vers le tiroir de soupape (16) ou dans la face frontale du tiroir de soupape qui est tournée vers le piston d'actionnement (14), on a prévu une gorge qui loge un joint torique (94) de telle sorte que le joint torique (94) dépasse partiellement de la face frontale, en particulier de 0,2 à 0,7 mm.

11. Soupape de freinage selon l'une quelconque des revendications 1 à 10, **caractérisée en ce que**, entre la chambre de pression de remplissage (64) et la chambre de pression de freinage (60), est disposée une soupape de surpression (76), laquelle s'ouvre sur la chambre de pression de remplissage (64) lors d'une différence de pression prédéfinissable entre la chambre de pression de freinage (60) et la chambre de pression de remplissage (64).

12. Soupape de freinage selon l'une quelconque des revendications 1 à 11, **caractérisée en ce que** la soupape de séquence (72) et/ou la soupape de surpression (76) est intégrée dans le piston, en particulier dans le tiroir de soupape (16).

13. Soupape de freinage selon la revendication 12, **caractérisée en ce que** le piston, en particulier le tiroir de soupape (16), comprend un creux longitudinal concentrique (30) qui, sur le côté ne faisant pas face à la chambre de pression de freinage (60), passe dans une surface d'étanchéité (82) s'effilant dans la section, **en ce qu'**un corps de soupape de séquence (72) est disposé de manière mobile dans le creux longitudinal (30), élément qui forme, avec une face frontale, un siège de soupape concourant avec la surface d'étanchéité (82) et est pressé contre la surface d'étanchéité (82) au moyen de la force d'un ressort de soupape de séquence (74), s'appuyant sur le piston ou sur le tiroir de soupape (16), de telle sorte que, lors d'une pression dans la chambre de pression de remplissage (64) qui dépasse la pression dans la chambre de pression de freinage (60) plus l'effet du ressort de soupape de séquence (74), le siège de soupape du corps de soupape de séquence (72) est soulevé de la surface d'étanchéité (82) et un canal de passage est ouvert entre la chambre de pression de remplissage (64) et la chambre de pression de freinage (60).

14. Soupape de freinage selon la revendication 13, **caractérisée en ce que** le corps de soupape de séquence (72) est configuré sous forme de douille et comporte, sur son côté tourné vers la chambre de pression de freinage (60), une surface d'étanchéité interne concentrique, **en ce qu'**est disposée de manière mobile dans le corps de soupape de séquence (72) une soupape de surpression (76) qui forme, avec une face frontale, un siège de soupape concourant avec la surface d'étanchéité et est pressé contre la surface d'étanchéité au moyen de la force d'un ressort de soupape de surpression (78) s'appuyant sur le corps de soupape de séquence (72), de telle sorte que, lors d'une pression dans la chambre de pression de freinage (60) qui dépasse la pression dans la chambre de pression de remplissage (64) plus l'effet du ressort de soupape de surpression (78), le siège de soupape de l'élément de soupape de surpression (76) est soulevé de la surface d'étanchéité et un canal de passage est ouvert entre la chambre de pression de freinage (60) et la chambre de pression de remplissage (64).

15. Soupape de freinage selon l'une quelconque des revendications 1 à 14, **caractérisée en ce que** le piston, en particulier le tiroir de soupape (16), comprend au moins une arête de commande (50) qui ouvre, lors du déplacement du piston, en particulier du tiroir de soupape (16), à partir de sa position de repos, une connexion entre la chambre de pression de freinage (60) et un canal de compensation en communication avec une seconde soupape de freinage et/ou un raccord de signalisation de la charge d'une pompe refoulante hydraulique servant de source de pression.

16. Soupape de freinage selon l'une quelconque des revendications 1 à 15, **caractérisée en ce que** la source de pression est une pompe hydraulique pour la fourniture de la pression de l'installation du véhicule.
